(19) 

Europäisches
Patentamt
European
Patent Office
Office européen
des brevets

(11) **EP 4 481 688 A1**

(12) **EUROPEAN PATENT APPLICATION**
published in accordance with Art. 153(4) EPC

(43) Date of publication:
**25.12.2024 Bulletin 2024/52**

(21) Application number: **23755780.6**

(22) Date of filing: **14.02.2023**

(51) International Patent Classification (IPC):
*G06T 17/00* $^{(2006.01)}$

(52) Cooperative Patent Classification (CPC):
**G06F 18/23; G06T 17/00; H04N 19/124**

(86) International application number:
**PCT/CN2023/075950**

(87) International publication number:
**WO 2023/155778 (24.08.2023 Gazette 2023/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.02.2022 CN 202210153272**

(71) Applicant: **VIVO MOBILE COMMUNICATION CO.,
LTD.
Dongguan, Guangdong 523863 (CN)**

(72) Inventors:
• ZOU, Wenjie
  Dongguan, Guangdong 523863 (CN)
• ZHANG, Wei
  Dongguan, Guangdong 523863 (CN)
• YANG, Fuzheng
  Dongguan, Guangdong 523863 (CN)
• LV, Zhuoyi
  Dongguan, Guangdong 523863 (CN)

(74) Representative: **Lavoix
Bayerstraße 83
80335 München (DE)**

(54) **ENCODING METHOD AND APPARATUS, AND DEVICE**

(57) This application discloses a coding method, apparatus, and device, and relates to the field of encoding and decoding technologies. The coding method includes: decimating, by a encoder, a target three-dimensional mesh to obtain a decimated mesh; quantizing, by the encoder, geometric information of the decimated mesh to obtain first information, where the first information includes at least one of the following: the first precision geometric information, the second precision geometric information, and information of supplementary points; and coding, by the encoder, the first information and connectivity information of a reconstructed mesh. The reconstructed mesh is determined based on the first information. The first precision geometric information is geometric information obtained after quantization of the target three-dimensional mesh. The second precision geometric information is geometric information lost during quantization of the target three-dimensional mesh. The information of the supplementary point is information of a point generated during quantization and requiring additional processing.

```
                    Start

An encoder decimates a target three-dimensional mesh to obtain a      101
decimated mesh

The encoder quantizes geometric information of the decimated mesh      102
to obtain first information

The encoder codes the first information and connectivity information    103
of a reconstructed mesh

                     End
```

FIG. 1

**EP 4 481 688 A1**

**Description**

**CROSS-REFERENCE TO RELATED APPLICATIONS**

This application claims priority to Chinese Patent Application No. 202210153272.X, filed in China on February 18, 2022, which is incorporated herein by reference in its entirety.

**TECHNICAL FIELD**

This application pertains to the field of encoding and decoding technologies, and specifically relates to a coding method, apparatus, and device.

**BACKGROUND**

Three-dimensional mesh (Mesh) can be considered as the most popular representation method for three-dimensional models in recent years and plays an important role in many application programs. The three-dimensional mesh features simple representation, and therefore is massively integrated into the graphics processing unit (Graphics Processing Unit, GPU) of computers, tablet computers, and smart phones with hardware algorithms, specially used for rendering three-dimensional meshes.

In all application fields using three-dimensional meshes, such as computational simulation, entertainment, medical imaging, digital cultural relics, computer design, and e-commerce, the requirements for mesh precision have been continuously increasing, the required data volume is also rapidly increasing, and currently a large number of three-dimensional models need to be accessed through the Internet. The above problems lead to increasingly complex processing, visualization, transmission, and storage of three-dimensional meshes. Compression of three-dimensional meshes is an important way to solve the above problems. It greatly reduces the data volume, facilitating the processing, storage, and transmission of three-dimensional meshes.

Generally speaking, the most important information in a mesh is geometric information, because geometric information describes the shape of a three-dimensional object, and the compression of geometric information can be combined with the point cloud compression technology currently being studied. In addition, for some applications, it is unnecessary for a model to be restored to original precision, so lossy compression is mostly used. However, the related art focuses only on the compression of geometric information, and such compression method cannot effectively reduce data volume.

**SUMMARY**

Embodiments of this application provide a coding method, apparatus, and device, so as to solve the problem that the compression method of three-dimensional mesh in the related art features large data volume.

According to a first aspect, a coding method is provided, including:

decimating, by an encoder, a target three-dimensional mesh to obtain a decimated mesh;
quantizing, by the encoder, geometric information of the decimated mesh to obtain first information, where the first information includes at least one of the following: the first precision geometric information, the second precision geometric information, and information of supplementary points; and
coding, by the encoder, the first information and connectivity information of a reconstructed mesh; where
the reconstructed mesh is determined based on the first information, the first precision geometric information is geometric information obtained after quantization of the target three-dimensional mesh, the second precision geometric information is geometric information lost during quantization of the target three-dimensional mesh, and the information of the supplementary point is information of a point generated during quantization and requiring additional processing.

According to a second aspect, a coding apparatus is provided, including:

a first obtaining module configured to decimate a target three-dimensional mesh to obtain a decimated mesh;
a second obtaining module configured to quantize geometric information of the decimated mesh to obtain first information, where the first information includes at least one of the following: the first precision geometric information, the second precision geometric information, and information of supplementary points; and
a first coding module configured to code the first information and connectivity information of a reconstructed mesh; where

the reconstructed mesh is determined based on the first information, the first precision geometric information is geometric information obtained after quantization of the target three-dimensional mesh, the second precision geometric information is geometric information lost during quantization of the target three-dimensional mesh, and the information of the supplementary point is information of a point generated during quantization and requiring additional processing.

According to a third aspect, a coding device is provided, including a processor and a memory, where the memory stores a program or instructions capable of running on the processor, and when the program or instructions are executed by the processor, the steps of the method according to the first aspect are implemented.

According to a fourth aspect, a coding device is provided, including a processor and a communication interface, where the processor is configured to: decimate a target three-dimensional mesh to obtain a decimated mesh; quantize geometric information of the decimated mesh to obtain first information, where the first information includes at least one of the following: the first precision geometric information, the second precision geometric information, and information of supplementary points; and code the first information and connectivity information of a reconstructed mesh; where the reconstructed mesh is determined based on the first information, the first precision geometric information is geometric information obtained after quantization of the target three-dimensional mesh, the second precision geometric information is geometric information lost during quantization of the target three-dimensional mesh, and the information of the supplementary point is information of a point generated during quantization and requiring additional processing.

According to a fifth aspect, a communication system is provided, including a coding device, where the coding device may be configured to execute the steps of the method according to the first aspect.

According to a sixth aspect, a readable storage medium is provided, where the readable storage medium stores a program or instructions, and when the program or instructions are executed by a processor, the steps of the method according to the first aspect are implemented.

According to a seventh aspect, a chip is provided, where the chip includes a processor and a communication interface, the communication interface is coupled to the processor, and the processor is configured to run a program or instructions to implement the method according to the first aspect.

According to an eighth aspect, a computer program/program product is provided, where the computer program/program product is stored in a storage medium, and the computer program/program product is executed by at least one processor to implement the steps of the method according to the first aspect.

In the embodiments of this application, a target three-dimensional mesh is decimated to obtain a decimated mesh, geometric information of the decimated mesh is quantized to obtain at least one of the first precision geometric information, the second precision geometric information, and information of supplementary points, and then the above information and connectivity information of a reconstructed mesh are coded. This solution can achieve lossy compression of connectivity information and reduce data volume.

## BRIEF DESCRIPTION OF DRAWINGS

FIG. 1 is a schematic flowchart of a coding method according to an embodiment of this application;
FIG. 2 is a schematic diagram of a vertex merging process during mesh decimation;
FIG. 3 is a schematic diagram of a mesh-based fine partition process;
FIG. 4 is a schematic diagram showing eight arrangement directions of a patch;
FIG. 5 is a schematic diagram of a coding process of high-precision geometric information;

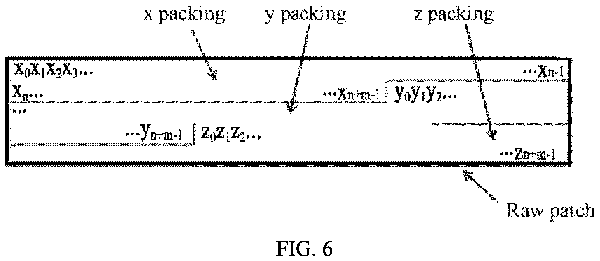

FIG. 6 is a schematic diagram of a raw patch;
FIG. 7 is a schematic diagram of a three-dimensional mesh coding framework;
FIG. 8 is a schematic diagram of modules of a coding apparatus according to an embodiment of this application;
FIG. 9 is a schematic structural diagram of a coding device according to an embodiment of this application; and
FIG. 10 is a schematic structural diagram of a communication device according to an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in the specification and claims of this application are used to distinguish between similar objects rather than to describe a specific order or sequence. It should be understood that the terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited. For example, there may be one or more first objects. In addition, in this specification and claims, "and/or" indicates at least one of the connected objects, and the character "/" generally indicates an "or" relationship between the contextually associated objects.

It should be noted that technologies described in the embodiments of this application are not limited to long term evolution (Long Term Evolution, LTE) or LTE-Advanced (LTE-Advanced, LTE-A) systems, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for illustrative purposes, and NR terms are used in most of the following descriptions, although these technologies may also be applied to other applications than the NR system application, for example, to the 6th generation (6th Generation, 6G) communication system.

The following describes in detail the coding method, apparatus, and device provided in the embodiments of this application through some embodiments and application scenarios thereof with reference to the accompanying drawings.

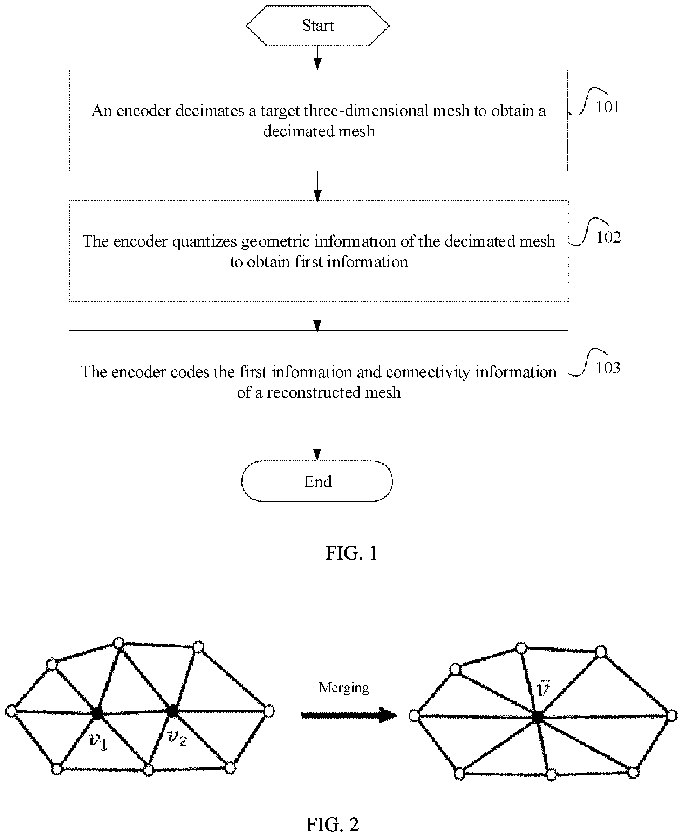

As shown in FIG. 1, an embodiment of this application provides a coding method including the following steps.

Step 101. An encoder decimates a target three-dimensional mesh to obtain a decimated mesh.

It should be noted that the target three-dimensional mesh mentioned in this application can be understood as a three-dimensional mesh corresponding to any video frame.

Step 102. The encoder quantizes geometric information of the decimated mesh to obtain first information.

It should be noted that the geometric information of the decimated mesh can be understood as coordinates of each vertex in the three-dimensional mesh, and the coordinates generally refer to three-dimensional coordinates.

Specifically, the first information includes at least one of the following:

A11. First precision geometric information.

It should be noted that the first precision geometric information can be understood as low-precision geometric information, to be specific, the low-precision geometric information refers to geometric information of the target three-dimensional mesh after quantization, that is, three-dimensional coordinate information of each vertex in the target three-dimensional mesh after quantization.

A12. Second precision geometric information.

It should be noted that the second precision geometric information can be understood as high-precision geometric information, and the high-precision geometric information can be regarded as geometric information lost during quantization, that is, the lost three-dimensional coordinate information.

A13. Information of supplementary points.

It should be noted that the information of the supplementary point refers to information of a point generated during quantization and requiring additional processing, in other words, the supplementary point is a point generated during quantization and requiring additional processing, for example, repeated points with overlapping coordinate positions. Processing on the repeated points allows vertices with overlapping coordinate positions during quantization to restore to original positions after dequantization.

Optionally, the information of the supplementary point includes at least one of the following:

A131. An index of a vertex in the first precision geometric information corresponding to the supplementary point.

It should be noted that with identifying of index, it is possible to know which points in the mesh after quantization each represents a plurality of points in the three-dimensional mesh before quantization, to be specific, a plurality of points in the three-dimensional mesh before quantization are merged into one after quantization, and the low-precision geometric information of the supplementary point can be determined using the index of the vertex.

A132. Third precision geometric information of the supplementary point.

It should be noted that the third precision geometric information can be understood as low-precision geometric information of the supplementary point, that is, three-dimensional coordinate information of the supplementary point after quantization.

A133. Fourth precision geometric information of the supplementary point.

It should be noted that the fourth precision geometric information can be understood as high-precision geometric information of the supplementary point, that is, three-dimensional coordinate information lost during quantization of the supplementary point.

It should be noted herein that in specific use, hidden points after quantization can be determined using A131 and A133 or using A132 and A133.

Step 103. The encoder codes the first information and connectivity information of a reconstructed mesh.

The reconstructed mesh is determined based on the first information.

It should be noted that the connectivity information refers to connection relationships between vertices in the mesh.

It should be noted that in the above solution, the target three-dimensional mesh is decimated to obtain the decimated mesh, the geometric information of the decimated mesh is quantized to obtain at least one of the first precision geometric information, the second precision geometric information, and the information of the supplementary point, and then the above information and the connectivity information of the reconstructed mesh are coded. This solution can improve the compression efficiency of the geometric information of the three-dimensional mesh, and can also achieve lossy compression of the connectivity information and effectively reduce data volume.

Optionally, an obtaining process of the connectivity information of the reconstructed mesh includes the following steps.

Step S11. The encoder performs geometric reconstruction based on coding information of the first information.

It should be noted that the geometric reconstruction herein refers to obtaining of three-dimensional coordinates using the coding information.

Step S12. The encoder performs mesh reconstruction based on geometric information after reconstruction and the decimated mesh to obtain the reconstructed mesh.

Step S13. The encoder obtains the connectivity information of the reconstructed mesh based on the reconstructed mesh.

It should be noted that performing mesh reconstruction using the coding information of the geometric information and then obtaining the connectivity information based on the reconstructed mesh can ensure that the obtained connectivity information is relatively accurate.

It should also be noted that after obtaining of the reconstructed mesh, the encoder needs to obtain attribute information of the reconstructed mesh and then code the attribute information to obtain a code stream corresponding to the attribute information.

Optionally, a specific implementation of step 101 in this application is as follows:
The encoder decimates the target three-dimensional mesh based on a quantization parameter to obtain the decimated mesh.

It should be noted that the quantization parameter mentioned in this application mainly includes quantization parameters on three components in direction X, direction Y, and direction Z.

Optionally, a specific implementation of decimating the target three-dimensional mesh based on a quantization parameter to obtain the decimated mesh is as follows:

When performing vertex merging in the target three-dimensional mesh, the encoder adjusts positions of some or all of vertices subjected to vertex merging in the target three-dimensional mesh to multiples of the quantization parameter to obtain the decimated mesh.

It should be noted that during setting of positions of merged points, with the quantization parameter taken into account, these positions are set to multiples of the quantization parameter, and such multiple may be any value that meets a use requirement. This can ensure that no additional information is needed during dequantization for restoring to original positions, reducing the data volume consumed by high-precision geometric information.

A specific implementation of the decimation processing is as follows.

For the input original mesh, mesh decimation is performed first. The focus of mesh decimation is on the decimation operation and a corresponding error metric. The mesh decimation operation herein may be decimation based on edge. As shown in FIG. 2, the number of facets and the number of vertices can be reduced by merging two vertices of an edge. In addition, mesh decimation can also be performed by using point-based mesh decimation method and the like.

During mesh decimation, it is necessary to define an error metric for decimation. For example, a sum of equation coefficients of all adjacent facets of a vertex may be selected as the error metric of the vertex, and correspondingly, an error metric of an edge is a sum of error metrics of two vertices on the edge. After determining of the decimation operation method and the error metric, mesh decimation can be started. For example, the mesh can be divided into one or more pieces of local meshes, and a vertex error of the initial mesh in the piece is first calculated to obtain the error of each edge. Then, all the edges in the piece are arranged according to a specific rule by errors, such as arranged in ascending order. Edges can be merged according to a specific rule during each decimation, for example, edges with the smallest error are selected for merging, at the same time positions of merged vertices are calculated and error metrics of all edges related to the merged vertices are updated, and an arrangement order of the edges is updated. The mesh facets are decimated to a specific expected number through iteration.

A specific process includes the following:

1. Calculation of vertex error

A vertex error may be defined as a sum of equation coefficients of all adjacent facets of a vertex. For example, each adjacent facet defines a plane, which can be represented by formula 1:

$$\text{formula 1: } D^2 = (n^T v + d)^2 = v^T (nn^T) v + 2dn^T v + d^2;$$

where

D is a distance from any vertex to the plane, n is a unit normal vector of the plane, $v$ is a position vector of the vertex, and $d$ is a constant. The plane is represented in the form of a quadratic surface as formula 2: $Q = (A, b, c) = (nn^T, dn, d^2)$; where
Q is a vertex error, and A, b, and c are coefficients representing the corresponding symbols in formula 1.

Formula 3 is further obtained from formula 2: $Q(v) = v^T A v + 2b^T v + c$.
Since the vertex error is the sum of equation coefficients of all adjacent facets of a vertex, formula 4 can be used: $Q_1(v) + Q_2(v) = (Q_1 + Q_2)(v) = (A_1 + A_2, b_1 + b_2, c_1 + c_2)(v)$. Q(v) is the vertex error, $v$ is the corresponding vertex, $Q_1(v)$ is the equation of an adjacent plane 1 of $v$, $Q_2(v)$ is the equation of an adjacent plane 2 of $v$, and $A_1$, $A_2$, $b_1$, $b_2$, $c_1$, and $c_2$ are respective corresponding coefficients. Certainly, if there are a plurality of adjacent facets, a corresponding plane error equation can also be added to formula 4.

2. Merging of vertices

A main step of a vertex merging process is to determine positions of merged vertices. According to the error formula 3, vertex positions that allow for an error as small as possible can be selected. For example, with the partial derivative of formula 3 taken, the following can be obtained: formula 4: $\bar{v} = -A^{-1}b$; and

$$\text{formula 5: } Q(\bar{v}) = -b^T A^{-1} b + c.$$

It can be seen from the above formulas that the points allowing for smallest error can be obtained only in a case that the matrix $A$ is invertible. Therefore, there may be a plurality of methods for selecting the positions of merged vertices. If the quality of mesh decimation is taken into account, in the case that the matrix $A$ is invertible, the vertex positions allowing for smallest error are selected; and in a case that the matrix $A$ is not invertible, one point in points on an edge, including two endpoints, that allows for smallest error can be selected. If the complexity of mesh decimation is taken into account, the midpoint or one of two endpoints of an edge can be directly selected as the positions of merged vertices. If the efficiency of quantization after mesh decimation is taken into account, it is also necessary to adjust the positions of merged vertices. Since the high-precision information needs to be coded separately after quantization, some of the positions of merged vertices are adjusted to multiples of the corresponding quantization parameter to ensure that no additional information is needed during dequantization for restoring to the original positions, which will reduce the data volume consumed by high-precision geometric information.
After how the positions of merged vertices are selected is determined, the vertex merging process can be started. For example, the errors of all edges in the initial mesh may be calculated first, and the edges are arranged according to a specific rule by errors, such as in ascending order. An edge that satisfies a specific rule is selected during each iteration, such as an edge with the smallest error. Two endpoints of edges are removed from the mesh vertices and the vertices after merging are added to the set of mesh vertices. All or some of adjacent vertices of two vertices before merging are used as adjacent vertices of the vertex after merging, and then error metrics of all points connected to the vertex after merging are updated, so as to obtain errors of newly generated edges. Then an arrangement order of the edges is updated from a global perspective of facets. The above process is repeated until the number of facets satisfying lossy coding is reached.

3. Updating of connection relationship

After vertex merging, some vertices are deleted from the vertex set and many new vertices are added, so it is necessary to update the connection relationships between vertices. For example, in the vertex merging process, two vertices before merging corresponding to a vertex after merging can be determined. It is only necessary to replace the indexes of the two vertices before merging, appearing in the facet, with the index of the vertex after merging, and then delete the face with repeated index to achieve the purpose of updating the connection relationships.
The above is the main process of mesh decimation. In addition, the three-dimensional mesh may also carry attribute information, and the attribute information may also need to be decimated. For a mesh with attribute information, such as texture coordinates, color, and normal vector, vertex coordinates can be extended to a higher dimension for calculating a vertex error with attribute information. Taking the texture coordinates as an example, let the vertex coordinates be $(x,y,z)$, and the texture coordinates be $(u, v)$, then the vertex after extension is $(x,y,z,u,v)$. Let the triangle after extension be $T = (p,q,r)$, to determine the error metric in high-dimensional space, two standard orthogonal vectors are first calculated as follows:

$$\text{formula 6:} \quad e_1 = \frac{q-p}{\|q-p\|};$$

and

$$\text{formula 7:} \quad e_2 = \frac{r-p-(e_1\cdot(r-p))e_1}{\|r-p-(e_1\cdot(r-p))e_1\|};$$

where $e_1$ and $e_2$ are two orthonormal vectors on the plane where T is located, q is, , and " $\cdot$ " herein represents multiplying of vectors, which defines a coordinate axis on the high-dimensional plane, with $p$ as the origin. An arbitrary point $v$ is considered, and $u = p - v$, then the following formulas are used: formula 8: $\|u\|^2 = (u \cdot e_1)^2 + ... + (\mu \cdot e_n)^2$; and

$$\text{formula 9:} \quad (u \cdot e_3)^2 + \cdots + (u \cdot e_n)^2 = \|\mu\|^2 - (\mu \cdot e_1)^2 - (u \cdot e_2)^2.$$

Since $e_1$ and $e_2$ are two vectors on the plane where T is located, the left side of formula 9 is the square of the distance from the vertex to the plane where T is located, then formula 10 can be used: $D^2 = \|\mu\|^2 - (\mu \cdot e_1)^2 - (u \cdot e_2)^2$; and formula 10 is expanded and merged to obtain an equation similar to formula 3, where:

$$\text{formula 11:} \quad A = I - e_1 e_1^T - e_2 e_2^T;$$

$$\text{formula 12:} \quad b = (p \cdot e_1)e_1 + (p \cdot e_2)e_2 - p;$$

and

$$\text{formula 13:} \quad c = p \cdot p - (p \cdot e_1)^2 - (p \cdot e_2)^2.$$

After the above error metric is obtained, the subsequent steps can be performed in the same way as for the previous three-dimensional information, so as to implement decimation of the mesh with attribute information.

Generally speaking, an edge part of an image is more likely to attract attention, thereby affecting evaluation on the quality of this image. The same is true for three-dimensional meshes. A boundary part tends to draw more attention. Therefore, whether the boundary is maintained is also a factor that affects quality in mesh decimation. A boundary of a mesh is generally the boundary of the geometric shape and the texture boundary. When an edge belongs to only one facet, the edge is a geometric boundary. When one vertex has two or more sets of texture coordinates, the vertex is the boundary of texture coordinates. In mesh decimation, the above boundaries should not be merged. Therefore, during each decimation, whether a vertex on an edge is a boundary point can be determined first, and if the vertex is a boundary point, the vertex is skipped and the next iteration is directly performed.

Optionally, a specific implementation of step 102 is as follows:

The encoder quantizes each vertex in the decimated mesh based on a quantization parameter of each component to obtain the first precision geometric information.

It should be noted that the quantization parameter of each component may be flexibly set based on a use requirement.

In general cases, for quantization with low precision requirements, it is possible to retain only low-precision geometric information obtained after quantization; while for quantization with high precision requirements, not only low-precision geometric information needs to be recorded during quantization, but also high-precision geometric information needs to be recorded, so that precise mesh restoration can be achieved during decoding. In other words, the specific implementation of step 102 should further include the following step.

The encoder obtains the second precision geometric information based on the first precision geometric information and the quantization parameter of each component.

For example, assuming that a vertex has three-dimensional coordinates of (x, y, z) and a quantization parameter of $(QP_x, QP_y, QP_z)$, the calculation process of low-precision geometric information $(x_l, y_l, z_l)$ and high-precision geometric information $(x_h, y_h, z_h)$ is as shown in formulas 14 to 19:

$$\text{formula 14: } x_l = f_1(x, QP_x);$$

$$\text{formula 15: } y_l = f_1(y, QP_y);$$

$$\text{formula 16: } z_l = f_1(z, QP_z);$$

$$\text{formula 17: } x_h = f_2(x, x_l, QP_x);$$

$$\text{formula 18: } y_h = f_2(y, y_l, QP_y);$$

and

$$\text{formula 19: } z_h = f_2(z, z_l, QP_z).$$

Function fi in formulas 14 to 16 is a quantization function, and the input of the quantization function is coordinates in a specific dimension and a quantization parameter in the dimension, and the output is coordinate values after quantization; and for function $f_2$ in formulas 17 to 19, the input is original coordinate values, coordinate values after quantization, and the quantization parameter in the dimension, and the output is high-precision coordinate values.

Function $f_1$ may have a plurality of calculation methods. A relatively common calculation method is to calculate by dividing the original coordinates in each dimension by the quantization parameter in the dimension, as shown in formulas 20 to 22. In the formulas, / is the division operator, and the result of the division operation may be rounded in different ways, such as rounding off, rounding down, and rounding up. Function $f_2$ also has a plurality of calculation methods, and the implementation corresponding to formulas 7 to 9 is as shown in formulas 23 to 25, where * is the multiplication operator.

$$\text{Formula 20: } x_l = x/QP_x;$$

$$\text{formula 21: } y_l = y/QP_y;$$

$$\text{formula 22: } z_l = z/QP_z;$$

$$\text{formula 23: } x_h = x - x_l * QP_x;$$

$$\text{formula 24: } y_h = y - y_l * QP_y;$$

and

$$\text{formula 25: } z_h = z - z_l * QP_z.$$

When the quantization parameter is an integer power of 2, functions fi and fi can be implemented using bitwise operations, as shown in formulas 26 to 31:

$$\text{formula 26: } x_l = x \gg \log_2 QP_x;$$

$$\text{formula 27: } y_l = y \gg \log_2 QP_y;$$

$$\text{formula 28: } z_l = z \gg \log_2 QP_z;$$

$$\text{formula 29: } x_h = x \And (QP_x - 1);$$

$$\text{formula 30: } y_h = y \And (QP_y - 1);$$

and

$$\text{formula 31: } z_h = z \And (QP_z - 1).$$

It is worth noting that no matter which calculation method is adopted for functions fi and $f_2$, the quantization parameters $QP_x$, $QP_y$, and $QP_z$ can all be flexibly set. First, quantization parameters of different components are not necessarily equal, and the correlation between quantization parameters of different components can be used to establish relationships between $QP_x$, $QP_y$, and $QP_z$, so as to set different quantization parameters for different components; and secondly, quantization parameters of different spatial regions are not necessarily equal either, and the quantization parameters can be adaptively set based on the sparseness of vertex distribution in local regions.

It should be noted that high-precision geometric information contains detail information of the contour of the three-dimensional mesh. To further improve the compression efficiency, the high-precision geometric information ($x_h$, $y_h$, $z_h$) can be further processed. In a three-dimensional mesh model, the importance of high-precision geometric information of vertices in different regions varies. For regions with sparse vertex distribution, distortion of high-precision geometric information does not have great influence on a visual effect of the three-dimensional mesh. In this case, to improve the compression efficiency, it is possible to choose to further quantize the high-precision geometric information, or to retain only the high-precision geometric information of some points.

Optionally, in the process of quantization, there may be a plurality of points overlap at a same position after quantization. In other words, in this case, the specific implementation of step 102 should further include the following step.

The encoder determines the information of the supplementary point based on the geometric information of the decimated mesh and the first precision geometric information.

In other words, after the low-precision geometric information of all vertices is obtained, points with repeated low-precision geometric information are used as supplementary points and coded separately. The geometric information of the supplementary points can also be divided into two parts: low-precision geometric information and high-precision geometric information. According to requirements of application for compression distortion, it is possible to choose to retain all supplementary points or retain only some of the supplementary points. The high-precision geometric information of the supplementary points may also be further quantized, or only the high-precision geometric information of some points is retained.

It should be noted that after the geometric information of the target three-dimensional mesh is quantized to obtain the first information, the first information needs to be coded to obtain a final code stream. Optionally, a specific implementation of coding the first information mentioned in this embodiment of this application includes the following steps.

Step 1031. The encoder processes the first information to obtain second information, where the second information includes at least one of occupancy map and geometry map.

Step 1032. The encoder codes the second information.

It should be noted that due to different types of information contained in the first information, during processing of the first information, different types of information are processed separately. An implementation of step 1031 is described below from the perspective of different information.

I. The first information includes the first precision geometric information

Optionally, in this case, a specific implementation of step 1031 includes the following steps.

Step 10311. The encoder performs three-dimensional patch partition on the first precision geometric information.

It should be noted that in this case, a main purpose is to perform patch (Patch) partition on low-precision geometric information to obtain a plurality of three-dimensional patches. A specific implementation of this step is as follows: the encoder determines a projection plane of each vertex in the first precision geometric information; the encoder performs patch partition on vertices in the first precision geometric information based on the projection planes; and the encoder clusters the vertices in the first precision geometric information to obtain each patch after partition. In other words, the process of patch partition mainly includes the following: first, a normal vector of each vertex is estimated, and a candidate projection plane with a smallest included angle between a normal vector of the plane and a normal vector of a vertex is selected as the projection plane of the vertex; then, the vertices are initially partitioned based on the projection planes, and vertices that are connected and have the same projection plane form a patch; and finally, a clustering result is optimized using a fine partition algorithm to obtain a final three-dimensional patch (3D patch).

A specific implementation of the process of obtaining three-dimensional patches from the first precision geometric information is described in detail below.

First, the normal vector of each point is estimated. A tangent plane and its corresponding normal are defined based on the nearest neighbor vertices of each point in a predefined search distance. A K-D tree is used for separating data and finding adjacent points near point $p_j$, and the centroid $c = \bar{p}$ of the set is used for defining the normal. The calculation method of the centroid c is as follows:

$$\text{formula 32: } c = \bar{p} = \frac{1}{m}\sum_{i=1}^{m} p_i.$$

The normal vector of the vertex is estimated using the principal component analysis method, and the calculation process is as shown in formula 33:

$$\text{formula 33: } \sum_{i=1}^{m}(p_i - \bar{p})(p_i - \bar{p})^T.$$

In the initial partition stage, a projection plane of each vertex is initially selected. Let the estimated value of the normal vector of the vertex be $\vec{n}_{pi}$, and the normal vector of the candidate projection plane be $\vec{n}_{pidx}$. A plane that has a direction of a normal vector closest to a direction of the normal vector of the vertex is selected as the projection plane of the vertex, and the calculation process of the plane selection is as shown in formula 34:

$$\text{formula 34: } \max_{p_{idx}}\{\vec{n}_{p_i} \cdot \vec{n}_{p_{idx}}\}.$$

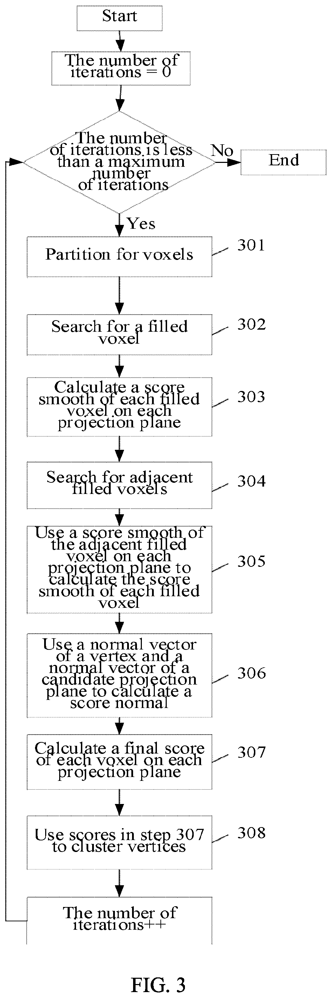

A mesh-based algorithm can be adopted for a fine partition process to reduce the time complexity of algorithm. The process of the mesh-based fine partition algorithm is as shown in FIG. 3 and specifically includes the following:

The number (number) of iterations is set to 0, and it is determined whether the number of iterations is less than a maximum number of iterations (it should be noted that the maximum number of iterations may be set based on a use requirement). If the number of iterations is less than the maximum number of iterations, the following processes are executed.

Step S301. Partition a geometric coordinate space of (x, y, z) into voxels.

It should be noted that the geometric coordinate space herein refers to a geometric coordinate space formed by the first precision geometric information obtained through quantization. For example, for a 10-bit mesh using a voxel size of 8, the number of voxels on each set of coordinates will be 1024/8 = 128, and the total number of voxels in this coordinate space will be 128×128×128.

Step S302. Search for a filled voxel, where the filled voxel refers to a voxel, in the mesh, that contains at least one point.

Step S303. Calculate a score smooth of each filled voxel on each projection plane, denoted as voxScoreSmooth, where a score smooth of a voxel on a specific projection plane is the number of points gathered on the projection plane through an initial segmentation process.

Step S304. Use KD-Tree partition to search for adjacent filled voxels, denoted as nnFilledVoxels, that is, the nearest filled voxels of each filled voxel (adjacent voxels within a search radius and/or limited to a maximum number).

Step S305. Use a score smooth of the adjacent filled voxel on each projection plane to calculate the score smooth (scoreSmooth) of each filled voxel, and the calculation process is as shown in formula 35:

$$\text{formula 35: } \text{scoreSmooth}[v][p] = \sum_{j=1}^{\text{size(nnFilledVoxels}[v])} \text{voxScoreSmooth}[v][p];$$

where

p is an index of the projection plane, and v is an index of the adjacent filled voxel. The scoreSmooth of all points in a voxel is the same.

Step S306. Use the normal vector of the vertex and the normal vector of the candidate projection plane to calculate a score normal, denoted as scoreNormal, and the calculation process is as shown in formula 36:

$$\text{formula 36:} \quad \text{scoreNormal}[i][p] = \text{normal}[i] \cdot \text{orientation}[p];$$

where

p is the index of the projection plane, and i is an index of the vertex.

Step S307. Use scoreSmooth and scoreNormal to calculate the final score of each voxel on each projection plane, and the calculation process is as shown in formula 37. Formula 37:

$$\text{score}[i][p] = \text{scoreNormal}[i][p] + \frac{\lambda}{\text{size}(\text{nnFilledVoxels}[v])} \times$$

$$\text{scoreSmooth}[v][p];$$

where

i is the index of the vertex, p is the index of the projection plane, and v is the voxel index in which vertex i is located.

Step S308. Use the scores in step 307 to cluster the vertices to obtain the finely partitioned patch.

The above processes are iterated a plurality of times until a relatively accurate patch is obtained.

Step 10312. The encoder performs two-dimensional projection on partitioned three-dimensional patches to obtain two-dimensional patches.

It should be noted that this process is to project the 3D patches onto a two-dimensional plane to obtain two-dimensional patches (2D patches).

Step 10313. The encoder packs the two-dimensional patches to obtain two-dimensional image information.

It should be noted that what this step implements is patch packing (Patch packing). The purpose of patch packing is to arrange the 2D patches on a two-dimensional image, and the basic principle of patch packing is to arrange the patches on the two-dimensional image without overlapping or to arrange the patches on the two-dimensional image with non-pixel parts of the patches partially overlapping. Algorithms such as priority arrangement and time-domain consistent arrangement are used to make the patch arrangement more compact and time-domain consistent, thereby improving the coding performance.

Assuming that the resolution of the two-dimensional image is WxH, the minimum block size of the patch arrangement is defined as T, specifying the minimum distance between different patches placed on this 2D mesh.

Patches are inserted and placed on the 2D mesh according to a principle of non-overlapping. Each patch occupies a region consisting of integer number of TxT blocks. In addition, a distance of at least one TxT block is required between adjacent patches. When there is not enough space for placing a next patch, the height of the image will be doubled, and then the patch placement will continue.

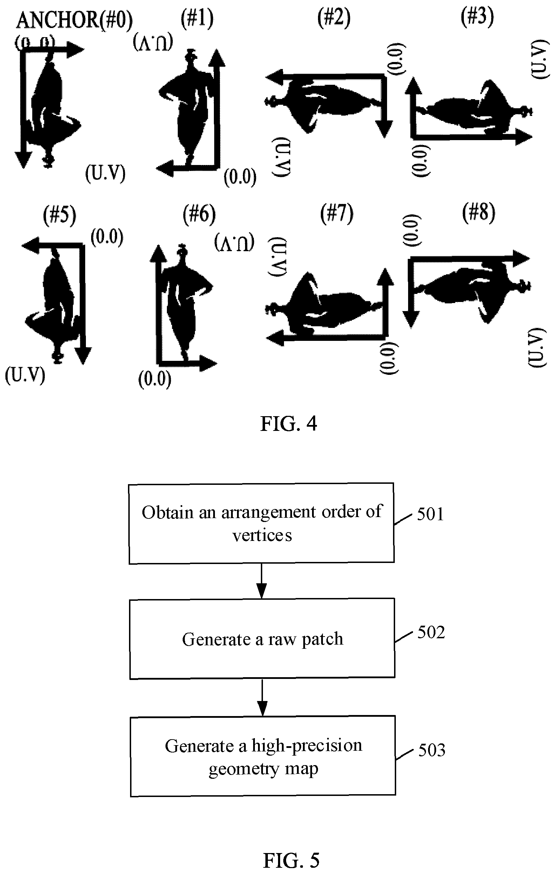

To make the patch arrangement more compact, a plurality of different arrangement directions can be selected for the patches. For example, eight different arrangement directions can be adopted, as shown in FIG. 4, including 0 degrees, 180 degrees, 90 degrees, 270 degrees, and mirror images of these four directions.

To achieve characteristics better adapted to inter-frame prediction of a video coder, a patch arrangement method with time-domain consistency is adopted. In a GOF (Group of frame, group of frame), all patches in the first frame are arranged in descending order. For other frames in the GOF, the arrangement order of the patches is adjusted using a time-domain consistency algorithm.

It should also be noted herein that after the two-dimensional image information is obtained, patch information can be obtained based on information during obtaining of the two-dimensional image information, and then the patch information can be coded to obtain a patch information substream.

It should be noted herein that during obtaining of the two-dimensional image information, it is necessary to record information of patch partition, information of patch projection plane, and information of patch packing position, so information of operations in the steps during obtaining of the two-dimensional image are recorded in the patch information, to be specific, the patch information includes the information of patch partition, the information of patch projection plane, and the information of patch packing position.

Step 10314. The encoder obtains a first precision occupancy map and a first precision geometry map based on the two-dimensional image information.

It should be noted that the process of obtaining the occupancy map is mainly as follows: obtaining the patch arrangement information using patch packing; and setting positions with vertices present in the two-dimensional image to 1 and the rest positions to 0 to obtain the occupancy map. The process of obtaining the geometry map is mainly as follows: in the process of obtaining the 2D patches using projection, distance from each vertex to the projection plane is saved, and such distance is called depth. The compression part of low-precision geometry map is to arrange the depth value of each vertex in the 2D patches to the position of the vertex in the occupancy map to obtain the low-precision geometry map.

II. The first information includes the second precision geometric information

Optionally, in this case, a specific implementation of step 1031 includes the following steps.

Step 10315. The encoder obtains an arrangement order of vertices in the first precision geometric information.

Step 10316. The encoder arranges the second precision geometric information corresponding to the vertices in the first precision geometric information in a two-dimensional image to generate a second precision geometry map.

It should be noted that the arrangement method of raw patch (raw patch) is used for the high-precision geometric information, and the high-precision geometric information corresponding to the vertices in the low-precision geometry map is arranged in the two-dimensional image to obtain a raw patch, so as to generate a high-precision geometry map. The arrangement method mainly includes three steps, as shown in FIG. 5, including the following steps.

Step 501. Obtain an arrangement order of the vertices, scan the low-precision geometry map from left to right row by row, and use the scanning order of the vertices as the arrangement order of the vertices in a raw patch.

Step 502. Generate the raw patch.

It should be noted that the raw patch is a rectangular patch with the three-dimensional coordinates of the vertices arranged in the manner shown in FIG. 5. The high-precision geometric information of the vertices is arranged in sequence according to the arrangement order of the vertices obtained in the first step to obtain the raw patch with high-precision geometric information.

Step 503. Place the high-precision geometric information in a two-dimensional image to generate a high-precision geometry map.

It should be noted that during obtaining of a geometry map substream through coding, the encoder codes the first precision geometry map and the second precision geometry map to obtain the geometry map substream.

III. The first information includes the information of the supplementary point

Optionally, in this case, a specific implementation of step 1031 includes the following steps.

Step 10317. The encoder arranges third precision geometric information of the supplementary point into a first raw patch.

Step 10318. The encoder arranges fourth precision geometric information of the supplementary point into a second raw patch according to a same arrangement order as the first raw patch.

Step 10319. The encoder compresses the first raw patch and the second raw patch to obtain a geometry map of the supplementary point.

It should be noted that in this embodiment of this application, the geometric information of the supplementary point is divided into low-precision part and high-precision part for separate coding. First, the low-precision geometric information of the supplementary point is arranged in any order into a low-precision raw patch (raw patch) of the supplementary point; secondly, the high-precision geometric information is arranged into a high-precision raw patch of the supplementary point according to the same order as the low-precision raw patch of the supplementary point; and finally, the low-precision raw patch and high-precision raw patch of the supplementary point are compressed, where various compression methods can be used. One method is to code the values in the raw patch using run-length coding, entropy coding, or the like, and another method is to add the low-precision raw patch of the supplementary point to a blank region in the low-precision geometry map, and add the high-precision raw patch of the supplementary point to a blank region in the high-precision geometry map, to obtain the geometry map of the supplementary point.

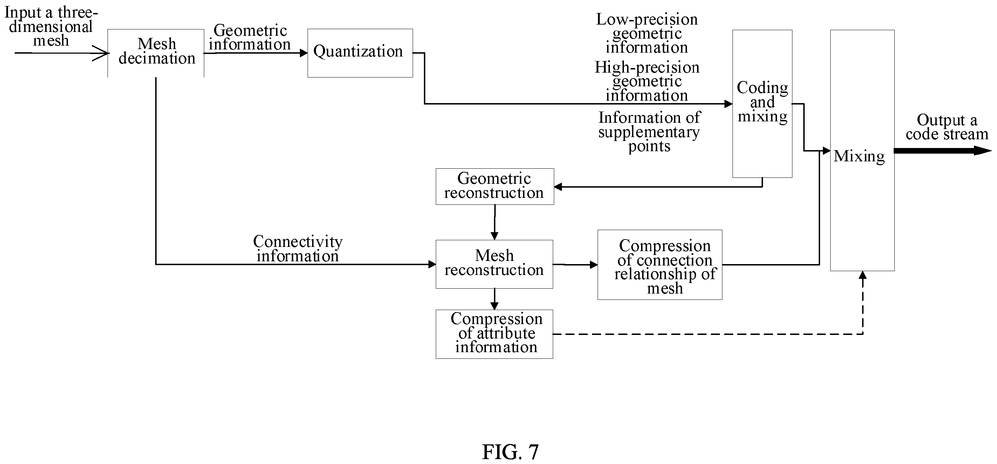

A video-based three-dimensional mesh coding framework according to an embodiment of this application is shown in FIG. 7. The overall coding process is as follows.

A mesh is first decimated at an encoder, and the numbers of mesh vertices and edges are reduced while maintaining the mesh structure to the greatest extent. Geometric information of the decimated mesh is then quantized, which may result in three parts: low-precision geometric information, high-precision geometric information, and information of supplementary points. For low-precision geometric information, projection is used for patch partition and patch arrangement to generate patch sequence compression information (patch partition information), occupancy map, and low-precision geometry map. For high-precision geometric information that may exist, the arrangement method of raw patch can be used to generate high-precision geometry map (it should be noted herein that the high-precision geometry map may be separately coded into one code stream; or the high-precision geometry map may be filled into the low-precision geometry map, and the low-precision geometry map is coded to obtain one code stream). For a supplementary point that may exist, geometric information of the supplementary point may be divided into low-precision part and high-precision part that are separately subjected to raw patch arrangement, and separately coded into one code stream; or the raw patch is added to the geometry map. Finally, the patch sequence compression information, the occupancy map, and the geometry map are coded to obtain corresponding substreams. The obtained substreams are mixed. On one hand, the obtained substreams are to be further mixed with a code stream of connection relationship and other code streams to obtain a final output code stream. On the other hand, the geometric information code stream is decoded to reconstruct the geometric information to be used as auxiliary information for coding of the connection relationship, the connection relationship of the original mesh is updated, and the updated connectivity information is coded again. The obtained code stream of connection relationship is mixed with the geometric information and other attribute information code streams that needs to be coded to obtain the final output code stream.

It should be noted that in this application, a video-based coding method is used to code coordinate information of mesh vertices, coordinates of the vertices are projected onto a two-dimensional plane, so that a video coder is used to code the coordinate information of the vertices in the mesh. Mesh decimation is added into the video-based mesh coding method to reduce the data volume of the mesh. In addition, quantization is used for generating low-precision geometric information, high-precision geometric information, and information of supplementary points. These three types of information are then coded separately. In this application, mesh decimation is added before quantization, quantization is considered during decimation, and decimation exists in quantization. This application aims at lossy coding mode and can effectively reduce data volume.

The coding method provided in the embodiments of this application may be executed by a coding apparatus. In the embodiments of this application, the information transmission method being executed by the coding apparatus is used as an example to describe the coding apparatus according to the embodiments of this application.

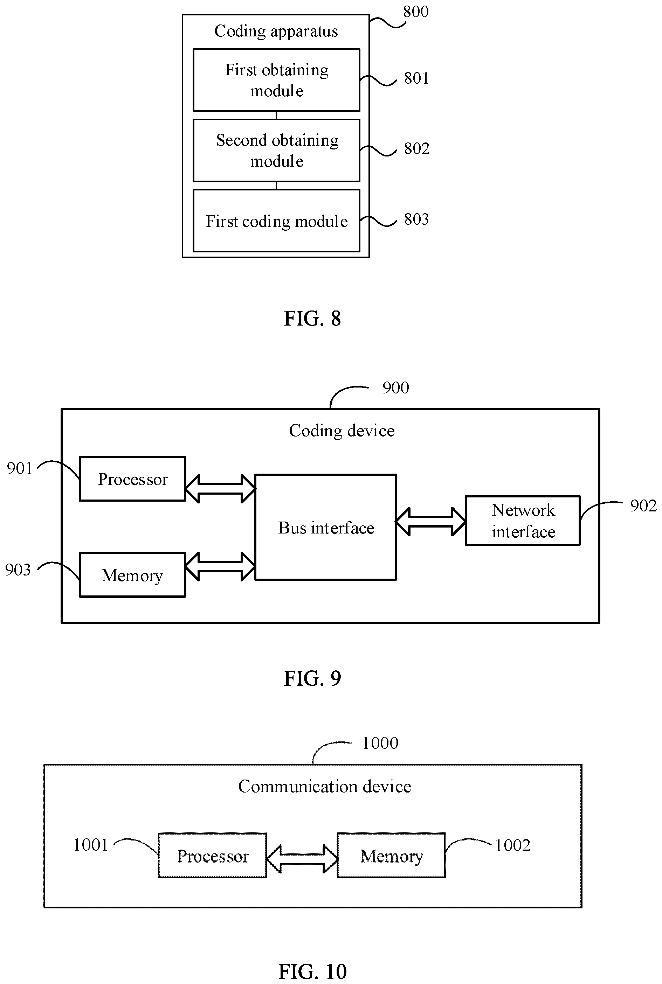

As shown in FIG. 8, an embodiment of this application provides a coding apparatus 800 including:

a first obtaining module 801 configured to decimate a target three-dimensional mesh to obtain a decimated mesh;
a second obtaining module 802 configured to quantize geometric information of the decimated mesh to obtain first information, where the first information includes at least one of the following: the first precision geometric information, the second precision geometric information, and information of supplementary points; and
a first coding module 803 configured to code the first information and connectivity information of a reconstructed mesh; where

the reconstructed mesh is determined based on the first information, the first precision geometric information is geometric information obtained after quantization of the target three-dimensional mesh, the second precision geometric information is geometric information lost during quantization of the target three-dimensional mesh, and the information of the supplementary point is information of a point generated during quantization and requiring additional processing.

Optionally, a manner of obtaining the connectivity information of the reconstructed mesh includes:

performing geometric reconstruction based on coding information of the first information;
performing mesh reconstruction based on geometric information after reconstruction and the decimated mesh to obtain the reconstructed mesh; and
obtaining the connectivity information of the reconstructed mesh based on the reconstructed mesh.

Optionally, the first obtaining module 801 is configured to:
decimate the target three-dimensional mesh based on a quantization parameter to obtain the decimated mesh.

Optionally, the first obtaining module 801 is configured to:
when performing vertex merging in the target three-dimensional mesh, adjust positions of some or all of vertices subjected to vertex merging in the target three-dimensional mesh to multiples of the quantization parameter to obtain the decimated mesh.

Optionally, the apparatus further includes:

a third obtaining module configured to obtain attribute information of the reconstructed mesh; and
a second coding module configured to code the attribute information.

Optionally, the second obtaining module 802 is configured to:
quantize each vertex in the decimated mesh based on a quantization parameter of each component to obtain the first precision geometric information.

Optionally, the second obtaining module 802 is further configured to:
obtain the second precision geometric information based on the first precision geometric information and the quantization parameter of each component.

Optionally, the second obtaining module 802 is further configured to:
determine the information of the supplementary point based on the geometric information of the decimated mesh and the first precision geometric information.

Optionally, the information of the supplementary point includes at least one of the following:

an index of a vertex in the first precision geometric information corresponding to the supplementary point;
third precision geometric information of the supplementary point, where the third precision geometric information is three-dimensional coordinate information obtained after quantization of the supplementary point; and
fourth precision geometric information of the supplementary point, where the fourth precision geometric information is three-dimensional coordinate information lost during quantization of the supplementary point.

Optionally, the first coding module 803 includes:

an obtaining unit configured to process the first information to obtain second information, where the second information includes at least one of occupancy map and geometry map; and
a coding unit configured for the encoder to code the second information.

Optionally, in a case that the first information includes the first precision geometric information, the obtaining unit is configured to:

perform three-dimensional patch partition on the first precision geometric information;
perform two-dimensional projection on partitioned three-dimensional patches to obtain two-dimensional patches;
pack the two-dimensional patches to obtain two-dimensional image information; and
obtain a first precision occupancy map and a first precision geometry map based on the two-dimensional image information.

Optionally, in a case that the first information includes the second precision geometric information, the obtaining unit is configured to:

obtain an arrangement order of vertices in the first precision geometric information; and
arrange the second precision geometric information corresponding to the vertices in the first precision geometric information in a two-dimensional image to generate a second precision geometry map.

Optionally, the coding unit is configured to:
code the first precision geometry map and the second precision geometry map to obtain a geometry map substream.
Optionally, in a case that the first information includes the information of the supplementary point, the obtaining unit is configured to:

arrange third precision geometric information of the supplementary point into a first raw patch;
arrange fourth precision geometric information of the supplementary point into a second raw patch according to a same arrangement order as the first raw patch; and
compress the first raw patch and the second raw patch to obtain a geometry map of the supplementary point.

This apparatus embodiment corresponds to the foregoing method embodiment. All processes and implementations in the foregoing method embodiment are applicable to this apparatus embodiment, with the same technical effects achieved.
Specifically, an embodiment of this application further provides a coding device. As shown in FIG. 9, the coding device 900 includes a processor 901, a network interface 902, and a memory 903. The network interface 902 is, for example, a common public radio interface (common public radio interface, CPRI).
Specifically, the network function 900 in this embodiment of the present invention further includes: instructions or a program stored in the memory 903 and capable of running on the processor 901. The processor 901 invokes the instructions or program in the memory 903 to execute the method executed by the modules shown in FIG. 8, with the same technical effects achieved. To avoid repetition, details are not described herein again.
Optionally, as shown in FIG. 10, an embodiment of this application further provides a communication device 1000 including a processor 1001 and a memory 1002. The memory 1002 stores a program or instructions capable of running on the processor 1001. For example, if the communication device 1000 is a coding device, when the program or instructions are executed by the processor 1001, the steps of the foregoing embodiments of the coding method are implemented, with the same technical effects achieved. To avoid repetition, details are not described herein again.
An embodiment of this application further provides a chip, where the chip includes a processor and a communication interface, the communication interface is coupled to the processor, and the processor is configured to run a program or instructions to implement the processes of the foregoing embodiments of the coding method, with the same technical effects achieved. To avoid repetition, details are not described herein again.
It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium. When the computer program/program product is executed by at least one processor, the processes of the foregoing embodiments of the sensing or sensing configuration method are implemented, with the same technical effects achieved. To avoid repetition, details are not described herein again.

An embodiment of this application further provides a communication system at least including a coding device, where the coding device may be configured to execute the steps of the foregoing coding method, with the same technical effects achieved. To avoid repetition, details are not described herein again.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more restrictions, an element preceded by the statement "includes a..." does not preclude the presence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

Based on the above description of embodiments, persons skilled in the art can clearly understand that the method in the foregoing embodiments can be implemented through software on a necessary hardware platform or certainly through hardware only, but in many cases, the former is the more preferred implementation. Based on such an understanding, the technical solutions of this application essentially or the part contributing to the related art may be implemented in a form of a computer software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The embodiments of this application have been described with reference to the accompanying drawings. However, this application is not limited to the foregoing specific implementations. These specific implementations are merely for illustration rather than limitation. Inspired by this application, persons of ordinary skill in the art may develop many other forms which do not depart from the essence of this application and the protection scope of the claims, and all such forms shall fall within the protection scope of this application.

## Claims

1. A coding method, comprising:

    decimating, by an encoder, a target three-dimensional mesh to obtain a decimated mesh;
    quantizing, by the encoder, geometric information of the decimated mesh to obtain first information, wherein the first information comprises at least one of the following: the first precision geometric information, the second precision geometric information, and information of supplementary points; and
    coding, by the encoder, the first information and connectivity information of a reconstructed mesh; wherein the reconstructed mesh is determined based on the first information, the first precision geometric information is geometric information obtained after quantization of the target three-dimensional mesh, the second precision geometric information is geometric information lost during quantization of the target three-dimensional mesh, and the information of the supplementary point is information of a point generated during quantization and requiring additional processing.

2. The method according to claim 1, wherein obtaining of the connectivity information of the reconstructed mesh comprises:

    performing, by the encoder, geometric reconstruction based on coding information of the first information;
    performing, by the encoder, mesh reconstruction based on geometric information after reconstruction and the decimated mesh to obtain the reconstructed mesh; and
    obtaining, by the encoder, the connectivity information of the reconstructed mesh based on the reconstructed mesh.

3. The method according to claim 1, wherein the decimating a target three-dimensional mesh to obtain a decimated mesh comprises:
decimating, by the encoder, the target three-dimensional mesh based on a quantization parameter to obtain the decimated mesh.

4. The method according to claim 3, wherein the decimating the target three-dimensional mesh based on a quantization parameter to obtain the decimated mesh comprises:
when performing vertex merging in the target three-dimensional mesh, adjusting, by the encoder, positions of some or all of vertices subjected to vertex merging in the target three-dimensional mesh to multiples of the quantization parameter to obtain the decimated mesh.

5. The method according to claim 1, further comprising:

   obtaining, by the encoder, attribute information of the reconstructed mesh; and
   coding, by the encoder, the attribute information.

6. The method according to claim 1, wherein the quantizing geometric information of the decimated mesh to obtain first information comprises:
quantizing, by the encoder, each vertex in the decimated mesh based on a quantization parameter of each component to obtain the first precision geometric information.

7. The method according to claim 6, wherein the quantizing geometric information of the decimated mesh to obtain first information further comprises:
obtaining, by the encoder, the second precision geometric information based on the first precision geometric information and the quantization parameter of each component.

8. The method according to claim 6, wherein the quantizing geometric information of the decimated mesh to obtain first information further comprises:
determining, by the encoder, the information of the supplementary point based on the geometric information of the decimated mesh and the first precision geometric information.

9. The method according to any one of claims 1 to 8, wherein the information of the supplementary point comprises at least one of the following:

   an index of a vertex in the first precision geometric information corresponding to the supplementary point;
   third precision geometric information of the supplementary point, wherein the third precision geometric information is three-dimensional coordinate information obtained after quantization of the supplementary point; and
   fourth precision geometric information of the supplementary point, wherein the fourth precision geometric information is three-dimensional coordinate information lost during quantization of the supplementary point.

10. The method according to claim 1, wherein the coding the first information comprises:

   processing, by the encoder, the first information to obtain second information, wherein the second information comprises at least one of occupancy map and geometry map; and
   coding, by the encoder, the second information.

11. The method according to claim 10, wherein in a case that the first information comprises the first precision geometric information, the processing the first information to obtain second information comprises:

   performing, by the encoder, three-dimensional patch partition on the first precision geometric information;
   performing, by the encoder, two-dimensional projection on partitioned three-dimensional patches to obtain two-dimensional patches;
   packing, by the encoder, the two-dimensional patches to obtain two-dimensional image information; and
   obtaining, by the encoder, a first precision occupancy map and a first precision geometry map based on the two-dimensional image information.

12. The method according to claim 10, wherein in a case that the first information comprises the second precision geometric information, the processing the first information to obtain second information comprises:

obtaining, by the encoder, an arrangement order of vertices in the first precision geometric information; and
arranging, by the encoder, the second precision geometric information corresponding to the vertices in the first precision geometric information in a two-dimensional image to generate a second precision geometry map.

13. The method according to claim 10, wherein the coding the second information comprises:
coding, by the encoder, the first precision geometry map and the second precision geometry map to obtain a geometry map substream.

14. The method according to claim 10, wherein in a case that the first information comprises the information of the supplementary point, the processing the first information to obtain second information comprises:

arranging, by the encoder, third precision geometric information of the supplementary point into a first raw patch;
arranging, by the encoder, fourth precision geometric information of the supplementary point into a second raw patch according to a same arrangement order as the first raw patch; and
compressing, by the encoder, the first raw patch and the second raw patch to obtain a geometry map of the supplementary point.

15. A coding apparatus, comprising:

a first obtaining module configured to decimate a target three-dimensional mesh to obtain a decimated mesh;
a second obtaining module configured to quantize geometric information of the decimated mesh to obtain first information, wherein the first information comprises at least one of the following: the first precision geometric information, the second precision geometric information, and information of supplementary points; and
a first coding module configured to code the first information and connectivity information of a reconstructed mesh; wherein
the reconstructed mesh is determined based on the first information, the first precision geometric information is geometric information obtained after quantization of the target three-dimensional mesh, the second precision geometric information is geometric information lost during quantization of the target three-dimensional mesh, and the information of the supplementary point is information of a point generated during quantization and requiring additional processing.

16. The apparatus according to claim 15, wherein a manner of obtaining the connectivity information of the reconstructed mesh comprises:

performing geometric reconstruction based on coding information of the first information;
performing mesh reconstruction based on geometric information after reconstruction and the decimated mesh to obtain the reconstructed mesh; and
obtaining the connectivity information of the reconstructed mesh based on the reconstructed mesh.

17. The apparatus according to claim 15, wherein the first obtaining module is configured to:
decimate the target three-dimensional mesh based on a quantization parameter to obtain the decimated mesh.

18. The apparatus according to claim 17, wherein the first obtaining module is configured to:
when performing vertex merging in the target three-dimensional mesh, adjust positions of some or all of vertices subjected to vertex merging in the target three-dimensional mesh to multiples of the quantization parameter to obtain the decimated mesh.

19. The apparatus according to claim 15, further comprising:

a third obtaining module configured to obtain attribute information of the reconstructed mesh; and
a second coding module configured to code the attribute information.

20. The apparatus according to claim 15, wherein the second obtaining module is configured to:
quantize each vertex in the decimated mesh based on a quantization parameter of each component to obtain the first precision geometric information.

21. The apparatus according to claim 20, wherein the second obtaining module is further configured to:
obtain the second precision geometric information based on the first precision geometric information and the quantization parameter of each component.

22. The apparatus according to claim 20, wherein the second obtaining module is further configured to:
determine the information of the supplementary point based on the geometric information of the decimated mesh and the first precision geometric information.

23. The apparatus according to any one of claims 15 to 22, wherein the information of the supplementary point comprises at least one of the following:

an index of a vertex in the first precision geometric information corresponding to the supplementary point;
third precision geometric information of the supplementary point, wherein the third precision geometric information is three-dimensional coordinate information obtained after quantization of the supplementary point; and
fourth precision geometric information of the supplementary point, wherein the fourth precision geometric information is three-dimensional coordinate information lost during quantization of the supplementary point.

24. The apparatus according to claim 15, wherein the first coding module comprises:

an obtaining unit configured to process the first information to obtain second information, wherein the second information comprises at least one of occupancy map and geometry map; and
a coding unit configured for the encoder to code the second information.

25. The apparatus according to claim 24, wherein in a case that the first information comprises the first precision geometric information, the obtaining unit is configured to:

perform three-dimensional patch partition on the first precision geometric information;
perform two-dimensional projection on partitioned three-dimensional patches to obtain two-dimensional patches;
pack the two-dimensional patches to obtain two-dimensional image information; and
obtain a first precision occupancy map and a first precision geometry map based on the two-dimensional image information.

26. The apparatus according to claim 24, wherein in a case that the first information comprises the second precision geometric information, the obtaining unit is configured to:

obtain an arrangement order of vertices in the first precision geometric information; and
arrange the second precision geometric information corresponding to the vertices in the first precision geometric information in a two-dimensional image to generate a second precision geometry map.

27. The apparatus according to claim 24, wherein the coding unit is configured to:
code the first precision geometry map and the second precision geometry map to obtain a geometry map substream.

28. The apparatus according to claim 24, wherein in a case that the first information comprises the information of the supplementary point, the obtaining unit is configured to:

arrange third precision geometric information of the supplementary point into a first raw patch;
arrange fourth precision geometric information of the supplementary point into a second raw patch according to a same arrangement order as the first raw patch; and
compress the first raw patch and the second raw patch to obtain a geometry map of the supplementary point.

29. A coding device, comprising a processor and a memory, wherein the memory stores a program or instructions capable of running on the processor, and when the program or instructions are executed by the processor, the steps of the coding method according to any one of claims 1 to 14 are implemented.

30. A readable storage medium, wherein the readable storage medium stores a program or instructions, and when the program or instructions are executed by a processor, the steps of the coding method according to any one of claims 1 to 14 are implemented.

**FIG. 1**

Merging

$v_1$ $v_2$ $\bar{v}$

**FIG. 2**

Start

The number of
iterations = 0

The number
of iterations is less
than a maximum
number
of iterations → No → End

↓ Yes

Partition for voxels — 301

Search for a filled
voxel — 302

Calculate a score
smooth of each filled
voxel on each
projection plane — 303

Search for adjacent
filled voxels — 304

Use a score smooth of
the adjacent filled
voxel on each
projection plane to
calculate the score
smooth of each filled
voxel — 305

Use a normal vector
of a vertex and a
normal vector of a
candidate projection
plane to calculate a
score normal — 306

Calculate a final score
of each voxel on each
projection plane — 307

Use scores in step 307
to cluster vertices — 308

The number of
iterations++

FIG. 3

ANCHOR(#0)    (#1)    (#2)    (#3)

FIG. 4

Obtain an arrangement order of vertices  ⟋501

Generate a raw patch  ⟋502

Generate a high-precision geometry map  ⟋503

FIG. 5

FIG. 6

FIG. 7

800

Coding apparatus

First obtaining module — 801

Second obtaining module — 802

First coding module — 803

**FIG. 8**

900

Coding device

901 — Processor

Bus interface

Network interface — 902

903 — Memory

**FIG. 9**

1000

Communication device

1001 — Processor

Memory — 1002

**FIG. 10**

## INTERNATIONAL SEARCH REPORT

| International application No. |
|---|
| **PCT/CN2023/075950** |

**A. CLASSIFICATION OF SUBJECT MATTER**

G06T 17/00(2006.01)i

According to International Patent Classification (IPC) or to both national classification and IPC

**B. FIELDS SEARCHED**

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

CNABS; CNTXT; CNKI; VEN; DWPI; USTXT; WOTXT; EPTXT: 三维网格, 编码, 量化, 简化, 几何信息, 丢失, three-dimensional grid, coding, Quantific+, simplif+, geometric information, lost

**C. DOCUMENTS CONSIDERED TO BE RELEVANT**

| Category* | Citation of document, with indication, where appropriate, of the relevant passages | Relevant to claim No. |
|---|---|---|
| A | CN 102625126 A (BEIJING UNIVERSITY OF TECHNOLOGY) 01 August 2012 (2012-08-01)<br>   description, paragraphs [0033]-[0088] | 1-30 |
| A | CN 101626509 A (BEIJING UNIVERSITY OF TECHNOLOGY) 13 January 2010 (2010-01-13)<br>   entire document | 1-30 |
| A | CN 112509102 A (STATE GRID JIANGXI ELECTRIC POWER CO., LTD. CONSTRUCTION BRANCH et al.) 16 March 2021 (2021-03-16)<br>   entire document | 1-30 |
| A | US 2020151952 A1 (ADOBE INC.) 14 May 2020 (2020-05-14)<br>   entire document | 1-30 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 April 2023** | **28 April 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

International application No.

**PCT/CN2023/075950**

| Patent document cited in search report | | | Publication date (day/month/year) | Patent family member(s) | | | Publication date (day/month/year) |
|---|---|---|---|---|---|---|---|
| CN | 102625126 | A | 01 August 2012 | CN | 102625126 | B | 15 October 2014 |
| CN | 101626509 | A | 13 January 2010 | CN | 101626509 | B | 02 February 2011 |
| CN | 112509102 | A | 16 March 2021 | None | | | |
| US | 2020151952 | A1 | 14 May 2020 | US | 10916054 | B2 | 09 February 2021 |

Form PCT/ISA/210 (patent family annex) (July 2022)

**REFERENCES CITED IN THE DESCRIPTION**

**Patent documents cited in the description**

- CN 202210153272X